# EUROPEAN PATENT APPLICATION

(11) **EP 4 806 839 A1**
(43) Date of publication of application: **16.09.2026**
(21) Application number: 25227422.0
(22) Date of filing: 29.12.2025
(51) Int. Cl.: C01B 3/025, B01D 53/04, C01B 3/56, C01C 1/04, C25B 1/04

(54) **SYSTEM AND METHOD FOR AMMONIA SYNTHESIS COUPLED WITH HYDROGEN PRODUCTION**

(30) Priority: 12.03.2025 CN 202510294319
(71) Applicant: Envision Energy Co., Ltd., Wuxi, Jiangsu (CN)
(72) Inventor: WEI, Yanxun, Wuxi, Jiangsu (CN); XU, Xuetao, Wuxi, Jiangsu (CN); FENG, Xiande, Wuxi, Jiangsu (CN); JIA, Jun, Wuxi, Jiangsu (CN); ZHANG, Jian, Wuxi, Jiangsu (CN)
(74) Representative: Balder IP Law, S.L.

(57) **Abstract**

Provided are a system and method for ammonia synthesis coupled with hydrogen production. The system includes: a hydrogen production module, a hydrogen deoxygenation module, an adsorption module, and an ammonia synthesis module connected in sequence; and a nitrogen supply module, a regeneration module, and the adsorption module connected in sequence. When one of the regeneration module and the adsorption module includes a first adsorption tower, the other includes a second adsorption tower. A hydrogen purification module, the nitrogen supply module, and the ammonia synthesis module are all connectable and disconnectable to the first adsorption tower and the second adsorption tower. The nitrogen supply module supplies nitrogen, the regeneration module uses nitrogen to perform desorption regeneration in the first adsorption tower or the second adsorption tower and supplies nitrogen to the adsorption module. The hydrogen production module supplies hydrogen to be purified, and the hydrogen deoxygenation module purifies the hydrogen to be purified and then supplies it to the adsorption module. The adsorption module purifies hydrogen and nitrogen and then supplies them to the ammonia synthesis module, which is at least conducive to reducing energy consumption and system investment costs.

## Description

### TECHNICAL FIELD

Embodiments of the present disclosure relate in general to the field of green chemical technology, and more specifically, a system and method for ammonia synthesis coupled with hydrogen production.

### BACKGROUND

With global attention to the environment and the proposal of the "dual carbon" goal, hydrogen energy, as a green energy source, has attracted much attention due to its advantages such as high calorific value, zero emissions, and no pollution, and related technologies for hydrogen have developed rapidly, where wind-solar integrated projects based on "source-grid-load-storage" have emerged one after another, dynamic water electrolysis hydrogen production technology and dynamic ammonia synthesis technology have also developed rapidly. However, there are some technical barriers to be broken through regarding how dynamic hydrogen purification technology couples dynamic hydrogen production and dynamic ammonia synthesis.

In addition, mainstream purification devices on the market adopt the pressure swing adsorption (PSA) process using hydrogen itself for regeneration. Since hydrogen molecules are smaller and carry less water, under the same dehydration conditions, the energy consumption for hydrogen regeneration is relatively high. Furthermore, the later stage ammonia synthesis process still requires additional equipment for mixing nitrogen and hydrogen, increasing the equipment investment cost, and the system adopts a relatively complex sequential control system, increasing the investment in instrumentation and control.

### SUMMARY

The present disclosure provides a system and method for ammonia synthesis coupled with hydrogen production, which is at least conducive to reducing energy consumption and system investment costs.

According to some embodiments of the present disclosure, an aspect of the present disclosure provides a system for ammonia synthesis coupled with hydrogen production, including: a hydrogen production module, a hydrogen deoxygenation module, an adsorption module, and an ammonia synthesis module connected in sequence; and a nitrogen supply module and a regeneration module connected in sequence, the regeneration module being connected to the adsorption module. In response to the regeneration module including a first adsorption tower, the adsorption module includes a second adsorption tower, and in response to the regeneration module including the second adsorption tower, the adsorption module includes the first adsorption tower. The hydrogen deoxygenation module, the nitrogen supply module, and the ammonia synthesis module are all connectable and disconnectable to each of the first adsorption tower and the second adsorption tower. The nitrogen supply module is configured to supply nitrogen to the regeneration module, and the regeneration module is configured to use nitrogen to perform desorption regeneration of a desiccant in the first adsorption tower or the second adsorption tower, and supply nitrogen to the adsorption module. The hydrogen production module is configured to provide hydrogen to be purified, and the hydrogen deoxygenation module is configured to purify the hydrogen to be purified to obtain hydrogen to be mixed, and supply the hydrogen to be mixed to the adsorption module. The adsorption module is configured to dehydrate mixed hydrogen and nitrogen, and supply dehydrated hydrogen and nitrogen to the ammonia synthesis module.

According to some embodiments of the present disclosure, another aspect of the present disclosure provides a method for ammonia synthesis coupled with hydrogen production, including: providing and utilizing a hydrogen production module to provide hydrogen to be purified; providing a hydrogen deoxygenation module connected to the hydrogen production module, utilizing the hydrogen deoxygenation module to purify the hydrogen to be purified to obtain hydrogen to be mixed, and providing the hydrogen to be mixed to an adsorption module connected to the hydrogen deoxygenation module; providing a nitrogen supply module and a regeneration module connected in sequence, with the regeneration module connected to the adsorption module, utilizing the nitrogen supply module to provide nitrogen to the regeneration module, utilizing nitrogen to perform desorption regeneration of a desiccant in one of a first adsorption tower and a second adsorption tower included in the regeneration module, and providing nitrogen to the adsorption module including the other of the first adsorption tower and the second adsorption tower; utilizing the adsorption module to dehydrate mixed hydrogen and nitrogen, and providing dehydrated hydrogen and nitrogen to an ammonia synthesis module connected to the adsorption module.

The embodiments of the present disclosure provide at least beneficial effects described below.

Equipment for dehydration treatment of hydrogen and nitrogen and equipment for mixing hydrogen and nitrogen are integrated into one unit. That is, an adsorption module is not only configured to mix hydrogen and nitrogen but also configured to perform dehydration treatment on the mixed hydrogen and nitrogen, which facilitating reducing the number of devices required for the system of ammonia synthesis coupled with hydrogen production and simplifying its control logic, saving equipment and instrumentation control investment, thereby helping reduce the investment cost of the system. Further, a hydrogen deoxygenation module, a nitrogen supply module, and an ammonia synthesis module are all connectable/disconnectable to a first adsorption tower and a second adsorption tower, enabling switching of working states of the first adsorption tower and the second adsorption tower. In this way, not only can mixing and dehydration treatment of hydrogen and nitrogen be achieved using one of the first adsorption tower and the second adsorption tower, but it also facilitates using nitrogen to achieve desorption regeneration of a desiccant in the other of the first adsorption tower and the second adsorption tower, allowing a regeneration module and the adsorption module to work simultaneously. It is to be noted that, on one hand, nitrogen serves both as a raw material required for ammonia synthesis and as a regeneration gas required for the first adsorption tower and the second adsorption tower, eliminating the need for additional gas as the regeneration gas required for the first adsorption tower and the second adsorption tower. On the other hand, compared with using hydrogen as the regeneration gas required for the first adsorption tower and the second adsorption tower, nitrogen molecules are larger and carry more water content, resulting in lower consumption of nitrogen under the same desorption heat, and correspondingly lower energy consumption for nitrogen regeneration under the same dehydration conditions, with higher regeneration efficiency.

### BRIEF DESCRIPTION OF THE DRAWINGS

One or more embodiments are exemplarily described with reference to the corresponding figures in the accompanying drawings, and the descriptions are not to be construed as limiting the embodiments. Unless otherwise particularly stated, the figures in the accompanying drawings are not drawn to scale. To describe the technical solutions in the embodiments of the present disclosure or in the conventional technologies more clearly, the following briefly introduces the accompanying drawings required for describing the embodiments. Apparently, the accompanying drawings in the following description show merely some embodiments of the present disclosure, and a person of ordinary skill in the art may still derive other accompanying drawings from these accompanying drawings without creative efforts.
FIG. 1 is a functional block diagram of a system for ammonia synthesis coupled with hydrogen production according to some embodiments of the present disclosure.
FIG. 2 is a schematic structural diagram of a system for ammonia synthesis coupled with hydrogen production according to some embodiments of the present disclosure.
FIG. 3 is another schematic structural diagram of a system for ammonia synthesis coupled with hydrogen production according to some embodiments of the present disclosure.

### DETAILED DESCRIPTION OF THE EMBODIMENTS

As known from the background part, dynamic coupling of hydrogen production technology and ammonia synthesis technology still requires further research.

The present disclosure provides a semiconductor structure, integrating equipment for dehydration treatment of hydrogen and nitrogen and equipment for mixing hydrogen and nitrogen into one unit. That is, an adsorption module is not only configured to mix hydrogen and nitrogen but also configured to perform dehydration treatment on the mixed hydrogen and nitrogen, which facilitating reducing the number of devices required for the system of ammonia synthesis coupled with hydrogen production and simplifying its control logic, saving equipment and instrumentation control investment, thereby helping reduce the investment cost of the system. Further, a hydrogen deoxygenation module, a nitrogen supply module, and an ammonia synthesis module are all connectable/disconnectable to a first adsorption tower and a second adsorption tower, enabling switching of working states of the first adsorption tower and the second adsorption tower. In this way, not only can mixing and dehydration treatment of hydrogen and nitrogen be achieved using one of the first adsorption tower and the second adsorption tower, but it also facilitates using nitrogen to achieve desorption regeneration of a desiccant in the other of the first adsorption tower and the second adsorption tower, allowing a regeneration module and the adsorption module to work simultaneously. It is to be noted that, on one hand, nitrogen serves both as a raw material required for ammonia synthesis and as a regeneration gas required for the first adsorption tower and the second adsorption tower, eliminating the need for additional gas as the regeneration gas required for the first adsorption tower and the second adsorption tower. On the other hand, compared with using hydrogen as the regeneration gas required for the first adsorption tower and the second adsorption tower, nitrogen molecules are larger and carry more water content, resulting in lower consumption of nitrogen under the same desorption heat, and correspondingly lower energy consumption for nitrogen regeneration under the same dehydration conditions, with higher regeneration efficiency.

In addition, the terms "first," "second," etc. are mainly used to distinguish different devices, elements or components (the specific types and configurations may be the same or different), and are not used to indicate or imply the relative importance and number of the indicated devices, elements or components. Unless otherwise indicated, "plurality" means two or more.

Reference herein to "embodiment" means that a particular feature, structure, or characteristic described in connection with the embodiment may be included in at least one embodiment of the present disclosure. The appearances of this phrase in various places in the specification are not necessarily all referring to the same embodiment, nor are separate or alternative embodiments that are mutually exclusive with other embodiments. It is explicitly and implicitly understood by those skilled in the art that the embodiments described herein may be combined with other embodiments.

In the description of the embodiments of the present disclosure, the technical terms "first" "second" and the like are only used to distinguish different objects and cannot be understood as indicating or implying relative importance or implicitly indicating the number, specific order, or primary and secondary relationship of the indicated technical features. In the description of the embodiments of the present disclosure, "a plurality of" means at least two, unless otherwise specified.

Reference herein to "embodiment" means that a particular feature, structure, or characteristic described in connection with the embodiment may be included in at least one embodiment of the present disclosure. The appearances of this phrase in various places in the specification are not necessarily all referring to the same embodiment, nor are separate or alternative embodiments that are mutually exclusive with other embodiments. It is explicitly and implicitly understood by those skilled in the art that the embodiments described herein may be combined with other embodiments.

In the description of the embodiments of the present disclosure, the term "and/or" is merely an association relationship describing associated objects, indicating that there may be three relationships, for example, A and/or B, which may indicate that A exists, A and B exist at the same time, and B exists. In addition, the character "/" in this specification generally indicates an "or" relationship between the associated objects.

In the description of the embodiments of the present disclosure, the term "a plurality of" means at least two, similarly, "a plurality of groups" means at least two groups, and "a plurality of pieces" means at least two pieces.

In the description of the embodiments of the present disclosure, orientation or positional relationship indicated by technical terms "center", "transverse", "longitudinal", "length", "width", "thickness", "up", "down", "front", "rear", "left", "right", "vertical", "horizontal", "top", "bottom", "inside" "outside", "clockwise", "counterclockwise", "axial", "radial", "circumferential" and the like are orientations or positional relationships based on those shown in the accompanying drawings, which are intended only to facilitate the description of embodiments of the present disclosure and to simplify the description, and are not intended to indicate or imply that the device or element referred to must have a particular orientation, be constructed and operated with a particular orientation, and therefore are not to be construed as a limitation of the embodiments of the present disclosure.

In the description of the embodiments of the present disclosure, unless otherwise specified and limited, technical terms "mounted", "connected", "connecting", "fixed", etc. are to be understood in a broad sense. For example, it may be a fixed connection, a removable connection, or a one-piece connection, it may be a mechanical connection, or an electrical connection, it may be a direct connection, or an indirect connection through an intermediate medium, and it may be a connection between two elements or an interaction between the two elements. For those of ordinary skill in the art, specific meanings of the above terms in the embodiments of the present disclosure may be understood according to specific situations.

In the accompanying drawings corresponding to the embodiments of the present disclosure, for better understanding and ease of description, the thickness and area of a layer are enlarged. When a component (e.g., a layer, a film, a region, or a substrate) is described as being formed over another component or over a surface of another component, the component may be "directly" on the surface of another component, or a third component may exist between the two components. In contrast, when a component is described as being formed on a surface of another component or a surface of a component is formed or provided with another component, there is no third component between the two components. In addition, when a component is described as being "substantially" formed on/over another component, it means that the component is not formed on/over the entire surface (or front surface) of another component, nor on/over a portion of the edge of the entire surface.

In the description of the embodiments of the present disclosure, when a component "includes" another component, unless otherwise stated, other components are not excluded, and other components may be further included in the component. In addition, when a component such as a layer, a film, a region, or a plate is referred to as being "over/disposed over" another component, it may be "directly on" another component (i.e., being on the surface of another component and there is no other component therebetween), or another component may exist therebetween. Furthermore, when a component such as a layer, film, region, plate, etc. is "directly on" another component, or when a component such as a layer, film, region, plate, etc. is disposed on the surface of another component, it means that no other component is disposed therebetween.

The terminology used in the description of the various described embodiments herein is for the purpose of describing particular embodiments only and is not intended to be limiting. As used in the description of the various embodiments described and the appended claims, "the portion" is also intended to include the plural forms as well, unless the context clearly indicates otherwise. The component includes a layer, a film, a region, or a plate, etc.

Embodiments of the present disclosure are described in detail below in conjunction with the accompanying drawings. Those of ordinary skill in the art should appreciate that in embodiments of the present disclosure, numerous technical details have been presented to enable better understanding of the present disclosure. However, even without these technical details and various variations and modifications based on the following embodiments, the technical solutions claimed in the present disclosure can be realized.

Embodiments of the present disclosure provide a system for ammonia synthesis coupled with hydrogen production. The system for ammonia synthesis coupled with hydrogen production according to some embodiments of the present disclosure is described in detail below with reference to the accompanying drawings.

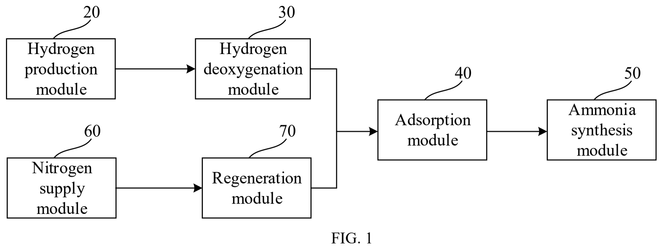

With combined reference to FIG. 1 to FIG. 3, the system for ammonia synthesis coupled with hydrogen production includes: a hydrogen production module 20, a hydrogen deoxygenation module 30, an adsorption module 40, and an ammonia synthesis module 50 connected in sequence; and a nitrogen supply module 60 and a regeneration module 70 connected in sequence, the regeneration module 70 being connected to the adsorption module 40. In response to the regeneration module 70 including a first adsorption tower 9, the adsorption module 40 includes a second adsorption tower 10, and in response to the regeneration module 70 including the second adsorption tower 10, the adsorption module 40 includes the first adsorption tower 9. The hydrogen deoxygenation module 30, the nitrogen supply module 60, and the ammonia synthesis module 50 are all connectable and disconnectable to each of the first adsorption tower 9 and the second adsorption tower 10. The nitrogen supply module 60 is configured to supply nitrogen to the regeneration module 70, and the regeneration module 70 is configured to use nitrogen to perform desorption regeneration of a desiccant in the first adsorption tower 9 or the second adsorption tower 10, and supply nitrogen to the adsorption module 40. The hydrogen production module 20 is configured to provide hydrogen to be purified. The hydrogen deoxygenation module 30 is configured to purify the hydrogen to be purified to obtain hydrogen to be mixed, and supply the hydrogen to be mixed to the adsorption module 40. The adsorption module 40 is configured to purify mixed hydrogen and nitrogen, and supply the purified hydrogen and nitrogen to the ammonia synthesis module 50.

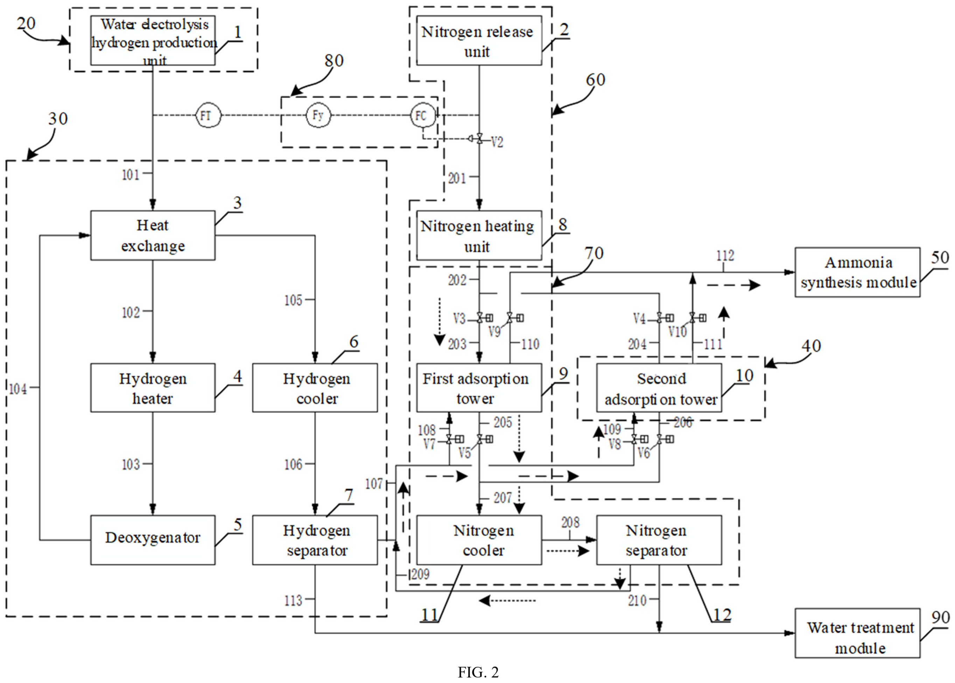

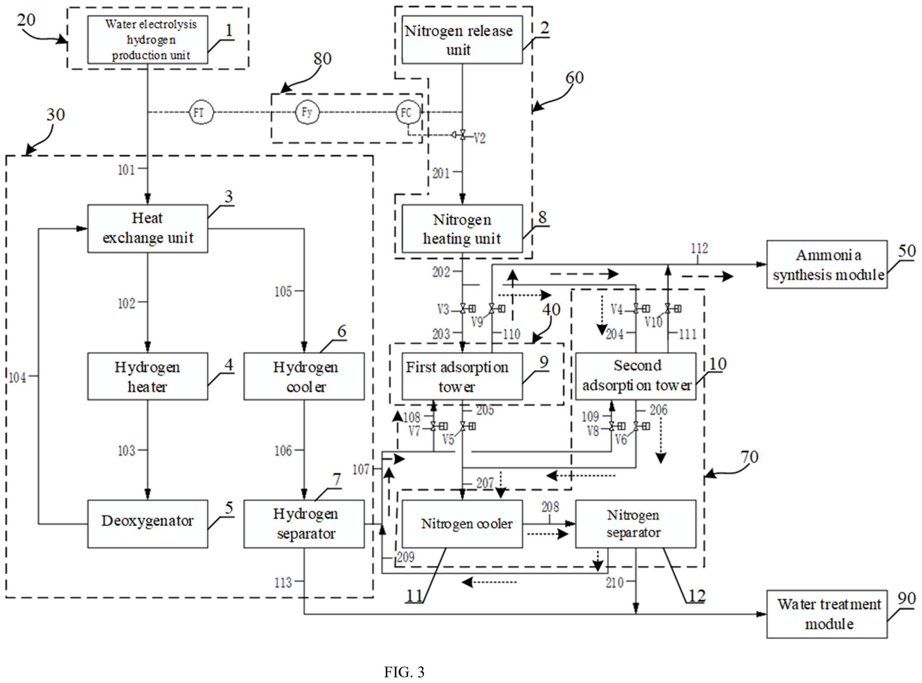

FIG. 1 is a functional block diagram of a system for ammonia synthesis coupled with hydrogen production according to some embodiments of the present disclosure. FIG. 2 is a schematic structural diagram of a system for ammonia synthesis coupled with hydrogen production according to some embodiments of the present disclosure. FIG. 3 is another schematic structural diagram of a system for ammonia synthesis coupled with hydrogen production according to some embodiments of the present disclosure.

It should be noted that in both FIG. 2 and FIG. 3, multiple denser dashed lines with arrows schematically indicate a flow path of nitrogen passing through the regeneration module 70, and multiple sparser dashed lines with arrows schematically indicate a flow path of hydrogen-nitrogen mixed gas passing through the adsorption module 40. Furthermore, FIG. 2 exemplifies the regeneration module 70 including the first adsorption tower 9 and the adsorption module 40 including the second adsorption tower 10, while FIG. 3 exemplifies the regeneration module 70 including the second adsorption tower 10 and the adsorption module 40 including the first adsorption tower 9.

It is to be noted that, compared with the related art which separately use different equipment to dehydrate prepared hydrogen and nitrogen and then use additional equipment to mix hydrogen and nitrogen, the system for ammonia synthesis coupled with hydrogen production according to the embodiments of the present disclosure integrates equipment for dehydration treatment of hydrogen and nitrogen and equipment for mixing hydrogen and nitrogen into one unit. That is, the adsorption module 40 is not only configured to mix hydrogen and nitrogen but also configured to perform dehydration treatment on the mixed hydrogen and nitrogen, thereby helping reduce the number of devices required for the system of ammonia synthesis coupled with hydrogen production and simplify its control logic, saving equipment and instrumentation control investment, and thus helping reduce the investment cost of the system.

Further, the hydrogen deoxygenation module 30, the nitrogen supply module 60, and the ammonia synthesis module 50 are all connectable and disconnectable to each of the first adsorption tower 9 and the second adsorption tower 10, enabling switching of working states of the first adsorption tower 9 and the second adsorption tower 10. This achieves that in response to the regeneration module 70 including the first adsorption tower 9, the adsorption module 40 includes the second adsorption tower 10; and in response to the regeneration module 70 including the second adsorption tower 10, the adsorption module 40 includes the first adsorption tower 9. In this way, not only can mixing of hydrogen and nitrogen and dehydration treatment be achieved using one of the first adsorption tower 9 and the second adsorption tower 10, but it also facilitates using nitrogen to achieve desorption regeneration of a desiccant in the other of the first adsorption tower 9 and the second adsorption tower 10, allowing the regeneration module 70 and the adsorption module 40 to work simultaneously. In other words, within a fixed time period, one of the first adsorption tower 9 and the second adsorption tower 10 is configured to mix hydrogen and nitrogen and perform dehydration treatment on the hydrogen-nitrogen mixed gas, and the other of the first adsorption tower 9 and the second adsorption tower 10 is configured to perform desorption regeneration of an internal desiccant by means of nitrogen.

It is to be noted that, on one hand, nitrogen serves both as a raw material required for ammonia synthesis and as a regeneration gas required for the first adsorption tower 9 and the second adsorption tower 10, eliminating the need for additional gas as the regeneration gas required for the first adsorption tower 9 and the second adsorption tower 10, only requiring that nitrogen be supplied to the regeneration module 70 before being supplied to the adsorption module 40. On the other hand, compared with using hydrogen as the regeneration gas required for the first adsorption tower 9 and the second adsorption tower 10, nitrogen molecules are larger and carry more water content, resulting in lower consumption of nitrogen under the same desorption heat, and correspondingly lower energy consumption for nitrogen regeneration under the same dehydration conditions, that is, energy loss caused by using nitrogen to perform desorption regeneration of the desiccant in the first adsorption tower 9 or the second adsorption tower 10 is lower, and regeneration efficiency is higher.

In some scenarios, after dehydration treatment is performed on mixed hydrogen and nitrogen by the adsorption module 40 in the system for ammonia synthesis coupled with hydrogen production according to some embodiments of the present disclosure, a purity of the hydrogen-nitrogen mixed gas supplied to the ammonia synthesis module 50 reaches 99.9% or higher.

The following provides a more detailed description of some embodiments of the present disclosure with reference to the accompanying drawings.

In some embodiments, with reference to FIG. 2 or FIG. 3, the hydrogen production module 20 may include a water electrolysis hydrogen production unit 1 and an energy supply unit (not shown). It should be noted that the hydrogen production module 20 according to some embodiments of the present disclosure includes but is not limited to the water electrolysis hydrogen production unit 1. In practical applications, the hydrogen production module may also be replaced with an other type of hydrogen production unit.

In some examples, the energy supply unit may be renewable energy sources such as wind energy, solar energy, hydro energy, and geothermal energy. In this way, compared with chemical plants using fossil energy sources such as coal and natural gas as raw materials, which emit large amounts of carbon dioxide during hydrogen production and exacerbate the greenhouse effect, using renewable energy sources such as wind energy, solar energy, hydro energy, and geothermal energy for water electrolysis hydrogen production helps significantly reduce carbon dioxide emissions and mitigate global warming and other negative impacts.

In some embodiments, with reference to FIG. 2 or FIG. 3, the hydrogen deoxygenation module 30 may include: a heat exchange unit 3 connected to the hydrogen production module 20; and a hydrogen heating deoxygenation unit and a hydrogen cooling separation unit each connected to an output end of the heat exchange unit 3. The hydrogen heating deoxygenation unit is further connected to an input end of the heat exchange unit 3, and is configured to deoxygenate hydrogen to be purified to obtain deoxygenated hydrogen. The heat exchange unit 3 is provided with a first air duct and a second air duct for heat exchange with each other. The first air duct is configured to transmit hydrogen to be purified, and the second air duct is configured to transmit deoxygenated hydrogen, so that the hydrogen to be purified is preheated in the heat exchange unit 3, and the deoxygenated hydrogen is initially cooled in the heat exchange unit 3. The hydrogen cooling separation unit is configured to perform secondary cooling and gas-liquid separation treatment on the deoxygenated hydrogen that has undergone initial cooling, to obtain hydrogen to be mixed.

It is to be noted that the first air duct and the second air duct disposed in the heat exchange unit 3 enable heat exchange between the hydrogen to be purified and the deoxygenated hydrogen. In this way, waste heat of the deoxygenated hydrogen can be fully utilized, and at the same time, power consumption of the subsequent hydrogen heating deoxygenation unit and hydrogen cooling separation unit can be significantly reduced, thereby helping reduce energy consumption of the system for ammonia synthesis coupled with hydrogen production and improving overall economic efficiency of the system for ammonia synthesis coupled with hydrogen production.

Specifically, high-temperature deoxygenated hydrogen obtained through treatment by the hydrogen heating deoxygenation unit undergoes heat exchange with low-temperature hydrogen to be purified in the heat exchange unit 3, causing the hydrogen to be purified to be preheated in the heat exchange unit 3, thereby reducing power consumption required by the subsequent hydrogen heating deoxygenation unit to heat the hydrogen to be purified to a preset high temperature, and also causing the deoxygenated hydrogen to be initially cooled in the heat exchange unit 3, thereby reducing power consumption required by the subsequent hydrogen cooling separation unit to cool the deoxygenated hydrogen to a preset low temperature.

In some scenarios, with reference to FIG. 2 or FIG. 3, the hydrogen heating deoxygenation unit may include a hydrogen heater 4 and a deoxygenator 5 connected in sequence. The hydrogen heater 4 is connected to the heat exchange unit 3 through a second connection pipe 102. The deoxygenator 5 is connected to the hydrogen heater 4 through a third connection pipe 103, and connected to the heat exchange unit 3 through a fourth connection pipe 104. In other examples, the hydrogen heating deoxygenation unit may be an integrated unit, in other words, heating treatment and deoxygenation treatment of the hydrogen to be purified may be completed in the same equipment.

It is to be noted that the hydrogen heater 4 is configured to heat the hydrogen to be purified that has been preheated by the heat exchange unit 3, to facilitate subsequent deoxygenation treatment of the hydrogen to be purified, and the deoxygenator 5 is configured to remove trace oxygen contained in the hydrogen to be purified.

In some examples, a treatment temperature of the hydrogen to be purified by the hydrogen heating deoxygenation unit may range from 40°C to 300°C. For example, the treatment temperature may be 50°C, 60°C, 70°C, 80°C, 90°C, 100°C, 140°C, 150°C, 160°C, 180°C, 200°C, 230°C, 250°C, 270°C, or 280°C.

In some examples, the hydrogen heating deoxygenation unit uses a deoxygenation catalyst to perform a deoxygenation reaction, so as to remove oxygen from the hydrogen to be purified.

In some instances, the deoxygenation catalyst may include at least one of a precious metal catalyst or a non-precious metal catalyst. Herein, the precious metal catalyst may be a platinum-based catalyst, a palladium-based catalyst, a mixed precious metal catalyst, or the like; and the non-precious metal catalyst may be a copper-based catalyst, a zinc-based catalyst, a mixed non-precious metal catalyst, or the like.

In some scenarios, with reference to FIG. 2 or FIG. 3, the hydrogen cooling separation unit may include a hydrogen cooler 6 and a hydrogen separator 7 connected in sequence. The hydrogen cooler 6 is connected to the heat exchange unit 3 through a fifth connection pipe 105, and the hydrogen separator 7 is connected to the hydrogen cooler 6 through a sixth connection pipe 106. In other examples, the hydrogen cooling separation unit may also be an integrated unit, in other words, secondary cooling treatment and gas-liquid separation treatment of the deoxygenated hydrogen may be completed in the same equipment.

It is to be noted that the hydrogen cooler 6 is configured to perform secondary cooling on the deoxygenated hydrogen that has been initially cooled by the heat exchange unit 3, to facilitate subsequent gas-liquid separation treatment of the deoxygenated hydrogen, and the hydrogen separator 7 is configured to remove trace moisture contained in the deoxygenated hydrogen.

In some embodiments, with reference to FIG. 2 or FIG. 3, the nitrogen supply module 60 may include a nitrogen release unit 2 and a nitrogen heating unit 8 connected in sequence. The nitrogen heating unit 8 is connectable and disconnectable to each of the first adsorption tower 9 and the second adsorption tower 10. The nitrogen release unit 2 is configured to provide initial nitrogen, and the nitrogen heating unit 8 is configured to heat the initial nitrogen to obtain regeneration nitrogen.

It is to be noted that at the same time, the nitrogen heating unit 8 is connected to one of the first adsorption tower 9 and the second adsorption tower 10, and is disconnected to the other of the first adsorption tower 9 and the second adsorption tower 10, to achieve switching of working states between the first adsorption tower 9 and the second adsorption tower 10. For example, with reference to FIG. 3, when the nitrogen heating unit 8 is connected to the second adsorption tower 10, and the regeneration module 70 includes the second adsorption tower 10, the regeneration nitrogen performs desorption regeneration of the desiccant in the second adsorption tower 10, while the adsorption module 40 includes the first adsorption tower 9 to purify mixed hydrogen and nitrogen. After the desiccant in the first adsorption tower 9 included in the adsorption module 40 absorbs a sufficient amount of moisture and becomes deactivated, with reference to FIG. 2, the nitrogen heating unit 8 is controlled to switch to being connected to the first adsorption tower 9, then when the regeneration module 70 includes the first adsorption tower 9, the regeneration nitrogen performs desorption regeneration of the deactivated desiccant in the first adsorption tower 9, enabling the first adsorption tower 9 to subsequently still purify mixed hydrogen and nitrogen. At this time, the adsorption module 40 includes the second adsorption tower 10 that has undergone desorption regeneration, to continue purifying mixed hydrogen and nitrogen.

In some examples, a purity of initial nitrogen provided by the nitrogen release unit 2 is greater than or equal to 99.99%.

In some embodiments, with reference to FIG. 2 or FIG. 3, the system for ammonia synthesis coupled with hydrogen production may further include a hydrogen flow meter FT, a nitrogen flow control valve V2, and a dynamic adjustment module 80. The hydrogen flow meter FT is disposed on the first connection pipe 101 connecting the hydrogen production module 20 to the hydrogen deoxygenation module 30, to detect a flow rate of hydrogen to be purified provided by the hydrogen production module 20 to the hydrogen deoxygenation module 30. The nitrogen flow control valve V2 is disposed within the nitrogen supply module 60, and configured to control a flow rate of nitrogen provided by the nitrogen supply module 60 to the regeneration module 70. The dynamic adjustment module 80 is electrically connected to the hydrogen flow meter FT and the nitrogen flow control valve V2, and configured to, based on the flow rate of the hydrogen to be purified, control an opening degree of the nitrogen flow control valve V2, to control a magnitude of the flow rate of nitrogen provided by the nitrogen supply module 60 to the regeneration module 70.

In some scenarios, in the operation of using renewable energy sources such as wind energy, solar energy, hydro energy, and geothermal energy for water electrolysis hydrogen production in the hydrogen production module 20, due to fluctuation of electricity provided by the renewable energy sources such as wind energy, solar energy, hydro energy, and geothermal energy, an instantaneous flow rate of hydrogen to be purified provided by the hydrogen production module 20 is affected, in other words, causing the flow rate of hydrogen to be purified provided by the hydrogen production module 20 to also have certain fluctuation. Based on this, the hydrogen flow meter FT is designed to detect the flow rate of hydrogen to be purified provided by the hydrogen production module 20 to the hydrogen deoxygenation module 30, and feedback to the dynamic adjustment module 80. Then, by means of the dynamic adjustment module 80, the opening degree of the nitrogen flow control valve V2 is controlled based on the flow rate of the hydrogen to be purified, to control the magnitude of the provided nitrogen flow rate, which helps enable the system for ammonia synthesis coupled with hydrogen production to adapt to fluctuation of the hydrogen production module 20, improve operability of the system, and achieve dynamic coupling of the hydrogen production module 20 and the ammonia synthesis module 50, thereby resolving the transition problem of the hydrogen production module 20 and the ammonia synthesis module 50, so as to ensure stable proceeding of the production process.

It is to be noted that, based on the design of the hydrogen flow meter FT, the nitrogen flow control valve V2, and the dynamic adjustment module 80, a magnitude of nitrogen flow rate provided to the regeneration module 70 can be made dependent on an instantaneous flow rate of hydrogen to be purified provided by the hydrogen production module 20. In other words, when the instantaneous flow rate of hydrogen to be purified provided by the hydrogen production module 20 detected by the hydrogen flow meter FT increases, the dynamic adjustment module 80 controls the nitrogen flow control valve V2 to increase the nitrogen flow rate provided to the regeneration module 70; and when the instantaneous flow rate of hydrogen to be purified provided by the hydrogen production module 20 detected by the hydrogen flow meter FT decreases, the dynamic adjustment module 80 controls the nitrogen flow control valve V2 to decrease the nitrogen flow rate provided to the regeneration module 70. In this way, under fluctuation of the flow rate of hydrogen to be purified provided by the hydrogen production module 20, hydrogen and nitrogen provided to the adsorption module 40 and the ammonia synthesis module 50 is controlled within a certain proportion range over a certain time period, avoiding excessive loss of hydrogen and ammonia during the ammonia synthesis process, and improving synthesis efficiency of the ammonia synthesis module 50.

In some scenarios, with reference to FIG. 2 or FIG. 3, the nitrogen supply module 60 may include a nitrogen release unit 2 and a nitrogen heating unit 8 connected in sequence. The nitrogen flow control valve V2 is disposed on a first connecting pipe 201 connecting the nitrogen release unit 2 to the nitrogen heating unit 8, to control a magnitude of nitrogen flow rate provided by the nitrogen supply module 60 to the regeneration module 70.

In some scenarios, the dynamic adjustment module 80 may include a calculator FY and a nitrogen flow controller FC electrically connected to each other. The calculator FY is electrically connected to the hydrogen flow meter FT, and configured to receive the flow rate of hydrogen to be purified detected by the hydrogen flow meter FT, calculate a flow rate of nitrogen required for ammonia synthesis based on such flow rate, and feedback the flow rate of nitrogen required for ammonia synthesis to the nitrogen flow controller FC. The nitrogen flow controller FC is configured to control an opening degree of the nitrogen flow control valve V2 based on the received flow rate of nitrogen required for ammonia synthesis.

In some embodiments, with reference to FIG. 2 or FIG. 3, the dynamic adjustment module 80 may further be configured to calculate a total input amount of the hydrogen to be purified based on the flow rate of hydrogen to be purified and a circulation time of the hydrogen to be purified in the first connection pipe 101, and in response to the total input amount reaching a preset value, switch one of the first adsorption tower 9 and the second adsorption tower 10 included in the regeneration module 70 to the other of the first adsorption tower 9 and the second adsorption tower 10.

It is to be noted that a total amount of water that a desiccant in the first adsorption tower 9 and the second adsorption tower 10 used for dehydration treatment of mixed hydrogen and nitrogen can adsorb in a single instance is fixed. When the amount of water adsorbed by the desiccant in a single instance reaches a saturated state, effective dehydration treatment can no longer be performed on subsequently introduced mixed hydrogen and nitrogen. Based on this, the dynamic adjustment module 80 is designed to, when the total input amount of hydrogen to be purified reaches the preset value, with combined reference to FIG. 2 and FIG. 3, switch one of the first adsorption tower 9 and the second adsorption tower 10 included in the regeneration module 70 to the other of the first adsorption tower 9 and the second adsorption tower 10, so as to timely perform desorption regeneration on the desiccant in one of the first adsorption tower 9 and the second adsorption tower 10 that has reached a saturated state of adsorbed water. In this way, by using the dynamic adjustment module 80 to fix the total input amount of hydrogen to be purified, a dynamic adsorption regeneration process of the first adsorption tower 9 and the second adsorption tower 10 can be achieved.

In some embodiments, with reference to FIG. 2 or FIG. 3, a third connecting pipe 203 is connected between the nitrogen supply module 60 and the first adsorption tower 9, and a fourth connecting pipe 204 is connected between the nitrogen supply module 60 and the second adsorption tower 10. The system for ammonia synthesis coupled with hydrogen production may further include a third switch valve V3 and a fourth switch valve V4. The third switch valve V3 is disposed on the third connecting pipe 203 and configured to control the third connecting pipe 203 to be opened or closed. The fourth switch valve V4 is disposed on the fourth connecting pipe 204 and configured to control the fourth connecting pipe 204 to be opened or closed. One of the third switch valve V3 and the fourth switch valve V4 is selectively opened at a same time instant. In response to the third switch valve V3 being opened, the regeneration module 70 includes the first adsorption tower 9, and the second adsorption tower 10 constitutes the adsorption module 40. In response to the fourth switch valve V4 being opened, the regeneration module 70 includes the second adsorption tower 10, and the first adsorption tower 9 constitutes the adsorption module 40.

It is understandable that both the third switch valve V3 and the fourth switch valve V4 are configured to control whether to supply regeneration nitrogen, and an adsorption tower corresponding to the opened one of the third switch valve V3 and the fourth switch valve V4 is an adsorption tower included in the regeneration module 70.

In some scenarios, the system for ammonia synthesis coupled with hydrogen production may further include a second connecting pipe 202, where the second connecting pipe 202 has one end connected to the nitrogen supply module 60 and another end connected to each of the third connecting pipe 203 and the fourth connecting pipe 204 to achieve connection between the nitrogen supply module 60 and each of the first adsorption tower 9 and the second adsorption tower 10.

In other scenarios, the nitrogen supply module may be independently provided with two nitrogen discharge outlets, one of the two nitrogen discharge outlets being directly connected to the first adsorption tower through the third connection pipe, and the other being directly connected to the second adsorption tower through the fourth connection pipe.

In some embodiments, with reference to FIG. 2 or FIG. 3, nitrogen provided by the nitrogen supply module 60 to the regeneration module 70 is regeneration nitrogen configured for desorption regeneration on the desiccant in the first adsorption tower 9 or the second adsorption tower 10, to obtain nitrogen to be separated. The regeneration module 70 may further include a nitrogen cooling separation unit connectable and disconnectable to each of the first adsorption tower 9 and the second adsorption tower 10, and connected to the hydrogen deoxygenation module 30. The nitrogen cooling separation unit is configured to perform cooling and gas-liquid separation treatment on the nitrogen to be separated, to obtain nitrogen to be mixed.

It is to be noted that water content of nitrogen to be separated obtained after desorption regeneration of the desiccant in the first adsorption tower 9 or the second adsorption tower 10 increases, thus requiring a gas-liquid separation treatment on the nitrogen to be separated, to ensure high purity of nitrogen subsequently provided to the ammonia synthesis module 50.

In some scenarios, with reference to FIG. 2 or FIG. 3, a fifth connecting pipe 205 is connected between the first adsorption tower 9 and the nitrogen cooling separation unit, and a sixth connecting pipe 206 is connected between the second adsorption tower 10 and the nitrogen cooling separation unit. The system for ammonia synthesis coupled with hydrogen production may further include: a fifth switch valve V5 disposed on the fifth connecting pipe 205 and configured to control the fifth connecting pipe 205 to be opened or closed; and a sixth switch valve V6 disposed on the sixth connecting pipe 206 and configured to control the sixth connecting pipe 206 to be opened or closed. Oen of the fifth switch valve V5 and the sixth switch valve V6 is selectively opened at a same time instant.

In some examples, the system for ammonia synthesis coupled with hydrogen production may further include a seventh connecting pipe 207. The seventh connecting pipe 207 has one end connected to the nitrogen cooling separation unit, and another end connected to each of the fifth connecting pipe 205 and the sixth connecting pipe 206 to achieve connection between the nitrogen cooling separation unit and each of the first adsorption tower 9 and the second adsorption tower 10. In other examples, the nitrogen cooling separation unit may be independently provided with two nitrogen inlet ports, one of the two nitrogen inlet ports being directly connected to the first adsorption tower through the fifth connection pipe, and the other being directly connected to the second adsorption tower through the sixth connection pipe.

In some examples, with reference to FIG. 2 or FIG. 3, the nitrogen cooling separation unit may include a nitrogen cooler 11 and a nitrogen separator 12 connected in sequence. The nitrogen cooler 11 is connected to the first adsorption tower 9 and the second adsorption tower 10 separately through the fifth connecting pipe 205, the sixth connecting pipe 206, and the seventh connecting pipe 207. The nitrogen separator 12 is connected to the nitrogen cooler 11 through the eighth connecting pipe 208, and connected to the hydrogen deoxygenation module 30 through the ninth connecting pipe 209. In one example, the nitrogen separator 12 is connected to the hydrogen separator 7 in the hydrogen deoxygenation module 30 through the ninth connecting pipe 209.

It is to be noted that the nitrogen cooler 11 is configured to cool nitrogen to be separated, to facilitate subsequent gas-liquid separation treatment of the nitrogen to be separated, and the nitrogen separator 12 is configured to remove moisture contained in the nitrogen to be separated.

In other examples, the nitrogen cooling separation unit may also be an integrated unit, in other words, cooling treatment and gas-liquid separation treatment of the nitrogen to be separated may be completed in the same equipment.

In some scenarios, with reference to FIG. 2 or FIG. 3, the nitrogen cooling separation unit and the hydrogen deoxygenation module 30 are both connected to the seventh connection pipe 107. An eighth connection pipe 108 is connected between the seventh connection pipe 107 and the first adsorption tower 9, and a ninth connection pipe 109 is connected between the seventh connection pipe 107 and the second adsorption tower 10. This arrangement helps simplify the pipeline layout between the nitrogen cooling separation unit, the hydrogen deoxygenation module 30, and the first adsorption tower 9 and the second adsorption tower 10.

In this way, the hydrogen to be mixed discharged from the hydrogen deoxygenation module 30 and the nitrogen to be mixed discharged from the nitrogen cooling separation unit undergo preliminary mixing in the seventh connection pipe 107, and then enter the adsorption module 40 for thorough mixing and dehydration treatment. In other words, the hydrogen deoxygenation module 30 and the regeneration module 70 use the seventh connection pipe 107 to mix the hydrogen to be mixed and the nitrogen to be mixed and then transmit them to the adsorption module 40.

In other scenarios, the hydrogen to be mixed discharged from the hydrogen deoxygenation module may be independently transmitted to the first adsorption tower and the second adsorption tower, and the nitrogen to be mixed discharged from the nitrogen cooling separation unit may also be independently transmitted to the first adsorption tower and the second adsorption tower, in other words, the hydrogen to be mixed and the nitrogen to be mixed undergo initial mixing in the adsorption module.

With continued reference to FIG. 2 or FIG. 3, the system for ammonia synthesis coupled with hydrogen production may further include: a seventh switch valve V7 disposed on the eighth connection pipe 108 and configured to control the eighth connection pipe 108 to be opened or closed; and an eighth switch valve V8 disposed on the ninth connection pipe 109 and configured to control the ninth connection pipe 109 to be opened or closed. One of the seventh switch valve V7 and the eighth switch valve V8 is selectively opened at a same time instant.

It is understandable that both the seventh switch valve V7 and the eighth switch valve V8 are configured to control whether to supply the mixed hydrogen and nitrogen, and an adsorption tower corresponding to the opened one of the seventh switch valve V7 and the eighth switch valve V8 is an adsorption tower included in the adsorption module 40.

In some embodiments, with reference to FIG. 2 or FIG. 3, a tenth connection pipe 110 is connected between the first adsorption tower 9 and the ammonia synthesis module 50, and an eleventh connection pipe 111 is connected between the second adsorption tower 10 and the ammonia synthesis module 50. The system for ammonia synthesis coupled with hydrogen production may further include: a ninth switch valve V9 disposed on the tenth connection pipe 110 and configured to control the tenth connection pipe 110 to be opened or closed; and a tenth switch valve V10 disposed on the eleventh connection pipe 111 and configured to control the eleventh connection pipe 111 to be opened or closed. One of the ninth switch valve V9 and the tenth switch valve V10 is selectively opened at a same time instant.

In some scenarios, the system for ammonia synthesis coupled with hydrogen production may further include a twelfth connection pipe 112. The twelfth connection pipe 112 has one end connected to the ammonia synthesis module 50, and another end connected to each of the tenth connection pipe 110 and the eleventh connection pipe 111, to achieve connection between the ammonia synthesis module 50 and each of the first adsorption tower 9 and the second adsorption tower 10.

In other scenarios, the ammonia synthesis module may be independently provided with two hydrogen-nitrogen mixed gas receiving ports, one of the two hydrogen-nitrogen mixed gas receiving ports being directly connected to the first adsorption tower through the tenth connection pipe, and the other being directly connected to the second adsorption tower through the eleventh connection pipe.

It is to be noted that, in some scenarios, with reference to FIG. 2, in response to the regeneration module 70 including the first adsorption tower 9 and the adsorption module 40 including the second adsorption tower 10, the third switch valve V3 and the fifth switch valve V5 connected to the first adsorption tower 9 are open, the seventh switch valve V7 and the ninth switch valve V9 are closed, the eighth switch valve V8 and the tenth switch valve V10 connected to the second adsorption tower 10 are open, and the fourth switch valve V4 and the sixth switch valve V6 are closed.

In other scenarios, with reference to FIG. 3, in response to the regeneration module 70 including the second adsorption tower 10 and the adsorption module 40 including the first adsorption tower 9, the seventh switch valve V7 and the ninth switch valve V9 connected to the first adsorption tower 9 are open, the third switch valve V3 and the fifth switch valve V5 are closed, the fourth switch valve V4 and the sixth switch valve V6 connected to the second adsorption tower 10 are open, and the eighth switch valve V8 and the tenth switch valve V10 are closed.

In some embodiments, with reference to FIG. 2 or FIG. 3, the system for ammonia synthesis coupled with hydrogen production may further include a water treatment module 90 connected to the hydrogen deoxygenation module 30 through a thirteenth connection pipe 113 and connected to the regeneration module 70 through a tenth connecting pipe 210, to discharge water separated from the hydrogen to be purified in the hydrogen deoxygenation module 30, and to discharge water separated from nitrogen in the regeneration module 70.

In some examples, the thirteenth connection pipe 113 connects the hydrogen separator 7 to the water treatment module 90, and the tenth connecting pipe 210 connects the nitrogen separator 12 to the water treatment module 90.

In some scenarios, with reference to FIG. 2 or FIG. 3, the thirteenth connection pipe 113 and the tenth connecting pipe 210 are combined before being connected to the water treatment module 90. In other scenarios, the water treatment module may be independently provided with two water treatment receiving ports, one of the two water treatment receiving ports being directly connected to the hydrogen deoxygenation module through the thirteenth connection pipe, and the other being directly connected to the regeneration module through the tenth connection pipe.

In summary, equipment for dehydration treatment of hydrogen and nitrogen and equipment for mixing hydrogen and nitrogen are integrated into one unit, that is, the adsorption module 40 is configured not only to mix hydrogen and nitrogen but also to perform dehydration treatment on mixed hydrogen and nitrogen, thereby helping reduce a number of devices required for the system for ammonia synthesis coupled with hydrogen production and simplify its control logic, saving equipment and instrumentation control investment, and thus helping reduce an investment cost of the system. Further, the hydrogen deoxygenation module 30, the nitrogen supply module 60, and the ammonia synthesis module 50 are all connectable and disconnectable to each of the first adsorption tower 9 and the second adsorption tower 10, enabling switching of working states of the first adsorption tower 9 and the second adsorption tower 10. Such configuration can not only utilize one of the first adsorption tower 9 and the second adsorption tower 10 to achieve mixing of hydrogen and nitrogen and dehydration treatment, but also facilitate use of nitrogen to achieve desorption regeneration of a desiccant in the other of the first adsorption tower 9 and the second adsorption tower 10, allowing the regeneration module 70 and the adsorption module 40 to work simultaneously. It is to be noted that nitrogen serves both as a raw material required for ammonia synthesis and as a regeneration gas required for the first adsorption tower 9 and the second adsorption tower 10, eliminating the need for additional gas as the regeneration gas required for the first adsorption tower 9 and the second adsorption tower 10, and at the same time, compared with using hydrogen as the regeneration gas required for the first adsorption tower 9 and the second adsorption tower 10, nitrogen molecules are larger and carry more water content, and thus under same desorption heat, consumption of nitrogen is smaller, then under same dehydration conditions, energy consumption for nitrogen regeneration is correspondingly lower, and regeneration efficiency is higher.

Some embodiments of the present disclosure further provide a method for ammonia synthesis coupled with hydrogen production, applied to the system for ammonia synthesis coupled with hydrogen production provided by the foregoing embodiments. The following describes in detail the method for ammonia synthesis coupled with hydrogen production provided by the embodiments of the present disclosure with reference to the accompanying drawings. It should be noted that parts identical or corresponding to those in the foregoing embodiments are not repeated herein.

With combined reference to FIG. 1 to FIG. 3, the method for ammonia synthesis coupled with hydrogen production includes: providing and utilizing the hydrogen production module 20 to provide hydrogen to be purified; providing the hydrogen deoxygenation module 30 connected to the hydrogen production module 20, utilizing the hydrogen deoxygenation module 30 to purify the hydrogen to be purified to obtain hydrogen to be mixed, and providing the hydrogen to be mixed to the adsorption module 40 connected to the hydrogen deoxygenation module 30; providing the nitrogen supply module and the regeneration module 70 connected in sequence, with the regeneration module 70 connected to the adsorption module 40, utilizing the nitrogen supply module to provide nitrogen to the regeneration module 70, utilizing nitrogen to perform desorption regeneration of a desiccant in one of the first adsorption tower 9 and the second adsorption tower 10 included in the regeneration module 70, and providing nitrogen to the adsorption module 40 including the other of the first adsorption tower 9 and the second adsorption tower 10; utilizing the adsorption module 40 to purify mixed hydrogen and nitrogen, and providing purified hydrogen and nitrogen to the ammonia synthesis module 50 connected to the adsorption module 40.

It is to be noted that using the system for ammonia synthesis coupled with hydrogen production provided by the foregoing embodiments to prepare ammonia gas requires only switching between the first adsorption tower 9 and the second adsorption tower 10, helping simplify control logic of the system for ammonia synthesis coupled with hydrogen production. Further, the regeneration module 70 and the adsorption module 40 can work simultaneously, nitrogen serves as regeneration gas required for the first adsorption tower 9 and the second adsorption tower 10, eliminating the need for additional gas as regeneration gas required for the first adsorption tower 9 and the second adsorption tower 10, and under same dehydration conditions, energy consumption for nitrogen regeneration is correspondingly lower, regeneration efficiency is higher, thereby helping reduce cost and energy consumption for preparing ammonia gas and improving efficiency of preparing ammonia gas.

Furthermore, using the system for ammonia synthesis coupled with hydrogen production provided by the foregoing embodiments to prepare ammonia gas can adapt to fluctuation of the hydrogen production module 20, improving operability of the system, achieve dynamic coupling of the hydrogen production module 20 and the ammonia synthesis module 50, resolving a problem of mismatched processing capacities between the hydrogen production module 20 and the ammonia synthesis module 50, and ensuring stable proceeding of the production process.

In some embodiments, using the hydrogen deoxygenation module 30 to purify the hydrogen to be purified to obtain hydrogen to be mixed may include the following operations.

Provide a heat exchange unit 3 connected to the hydrogen production module 20, the heat exchange unit 3 being provided with a first air duct and a second air duct for heat exchange with each other, use the first air duct to transmit hydrogen to be purified, and use the second air duct to transmit deoxygenated hydrogen, so that the hydrogen to be purified is preheated in the heat exchange unit 3, and the deoxygenated hydrogen is initially cooled in the heat exchange unit 3. Subsequent operations of receiving deoxygenated hydrogen by the heat exchange unit 3 are described in detail later.

Provide a hydrogen heating deoxygenation unit and a hydrogen cooling separation unit each connected to an output end of the heat exchange unit 3, the hydrogen heating deoxygenation unit being further connected to an input end of the heat exchange unit 3, use the hydrogen heating deoxygenation unit to deoxygenate the hydrogen to be purified to obtain deoxygenated hydrogen, use the hydrogen cooling separation unit to perform secondary cooling and gas-liquid separation treatment on the deoxygenated hydrogen that has undergone initial cooling, to obtain hydrogen to be mixed.

In some embodiments, the method for ammonia synthesis coupled with hydrogen production can be broadly divided into five process operations: deoxygenation, primary cooling separation, adsorption, regeneration, and secondary cooling separation. The material flow directions in each process operation are as follows:

Process Operation I: In the deoxygenation operation, hydrogen to be purified from the water electrolysis hydrogen production unit 1 is subjected to measurement by the hydrogen flow meter FT on the first connection pipe 101, then exchanges heat in the heat exchange unit 3 with deoxygenated hydrogen that has been deoxygenated by the deoxygenator 5 and transmitted via the fourth connection pipe 104. The preheated hydrogen to be purified is sent through the second connection pipe 102 to the hydrogen heater 4 for heating, and then transmitted through the third connection pipe 103 to the deoxygenator 5 for deoxygenation reaction.

Process Operation II: In the primary cooling separation operation, the deoxygenated hydrogen passing through the heat exchange unit 3 undergoes initial cooling, is transmitted through the fifth connection pipe 105 to the hydrogen cooler 6 for secondary cooling, and after cooling, is transmitted through the sixth connection pipe 106 to the hydrogen separator 7 to separate water from hydrogen.

Process Operation III: In the adsorption operation, the hydrogen to be mixed from the hydrogen separator 7 and the nitrogen to be mixed from the nitrogen separator 12 are mixed and first pass through the seventh connection pipe 107. After the seventh switch valve V7 and the ninth switch valve V9 are opened and the eighth switch valve V8 and the tenth switch valve V10 are closed, the mixed hydrogen and nitrogen are then transmitted through the eighth connection pipe 108 to the first adsorption tower 9 for adsorption dehydration, and finally transmitted through the tenth connection pipe 110 and the twelfth connection pipe 112 to the ammonia synthesis module 50; or, after the eighth switch valve V8 and the tenth switch valve V10 are opened and the seventh switch valve V7 and the ninth switch valve V9 are closed, the mixed hydrogen and nitrogen are then transmitted through the ninth connection pipe 109 to the second adsorption tower 10 for adsorption dehydration, and finally transmitted through the eleventh connection pipe 111 and the twelfth connection pipe 112 to the ammonia synthesis module 50.

Process Operation IV: In the regeneration operation, a magnitude of a flow rate of nitrogen in the first connecting pipe 201 is controlled based on the dynamic adjustment module 80, initial nitrogen from the nitrogen release unit 2 is transmitted through the nitrogen flow control valve V2 on the first connecting pipe 201 to the nitrogen heating unit 8 and then transmitted to the second connecting pipe 202. After the fourth switch valve V4 and the sixth switch valve V6 are opened and the third switch valve V3 and the fifth switch valve V5 are closed, the heated nitrogen is then transmitted through the fourth connecting pipe 204 to the second adsorption tower 10 for desorption regeneration, and finally transmitted through the sixth connecting pipe 206 and the seventh connecting pipe 207 to the nitrogen cooler 11; or, after the third switch valve V3 and the fifth switch valve V5 are opened and the fourth switch valve V4 and the sixth switch valve V6 are closed, the heated nitrogen is then transmitted through the third connecting pipe 203 to the first adsorption tower 9 for desorption regeneration, and finally transmitted through the fifth connecting pipe 205 and the seventh connecting pipe 207 to the nitrogen cooler 11.

Process Operation V: In the secondary cooling separation operation, nitrogen to be separated coming from the first adsorption tower 9 or second adsorption tower 10 is cooled after entering the nitrogen cooler 11, then transmitted via the eighth communication pipe 208 to the nitrogen separator 12 for gas-liquid separation, and finally transmitted through the ninth communication pipe 209 to the seventh connection pipe 107 to mix with the hydrogen to be mixed.

In addition, wastewater from the hydrogen separator 7 and the nitrogen separator 12 is discharged to the water treatment module 90 through the thirteenth connecting pipe 113 and tenth communication pipe 210, respectively.

A person of ordinary skill in the art shall understand that the above embodiments are merely specific and exemplary embodiments for practicing the present disclosure, and in practice, various modifications may be made to these embodiments in terms of formality and detail without departing from the scope of the present disclosure. Various variations and modifications may be made by one skilled in the art without departing from the scope of the present disclosure. Accordingly, the protection scope of the present disclosure is subject to the appended claims.

## Claims

1. A system for ammonia synthesis coupled with hydrogen production, comprising:
a hydrogen production module (20), a hydrogen deoxygenation module (30), an adsorption module (40), and an ammonia synthesis module (50) connected in sequence; and
a nitrogen supply module (60) and a regeneration module (70) connected in sequence, the regeneration module (70) being connected to the adsorption module (40);
wherein in response to the regeneration module (70) including a first adsorption tower (9), the adsorption module (40) includes a second adsorption tower (10), and in response to the regeneration module (70) including the second adsorption tower (10), the adsorption module (40) includes the first adsorption tower (9);
wherein the hydrogen deoxygenation module (30), the nitrogen supply module (60), and the ammonia synthesis module (50) are all connectable and disconnectable to each of the first adsorption tower (9) and the second adsorption tower (10);
wherein the nitrogen supply module (60) is configured to supply nitrogen to the regeneration module (70), and the regeneration module (70) is configured to use the nitrogen to perform desorption regeneration of a desiccant in the first adsorption tower (9) or the second adsorption tower (10), and supply nitrogen to the adsorption module (40);
wherein the hydrogen production module (20) is configured to provide hydrogen to be purified, and the hydrogen deoxygenation module (30) is configured to purify the hydrogen to be purified to obtain hydrogen to be mixed, and supply the hydrogen to be mixed to the adsorption module (40); and
wherein the adsorption module (40) is configured to dehydrate mixed hydrogen and nitrogen and to supply dehydrated hydrogen and nitrogen to the ammonia synthesis module (50).

2. The system according to claim 1, wherein the hydrogen deoxygenation module (30) includes:
a heat exchange unit (3), connected to the hydrogen production module (20); and
a hydrogen heating deoxygenation unit and a hydrogen cooling separation unit, each connected to an output end of the heat exchange unit (3), wherein the hydrogen heating deoxygenation unit is further connected to an input end of the heat exchange unit (3);
wherein the hydrogen heating deoxygenation unit is configured to deoxygenate the hydrogen to be purified to obtain deoxygenated hydrogen, the heat exchange unit (3) is provided with a first air duct and a second air duct for heat exchange with each other, the first air duct is configured to transmit the hydrogen to be purified, the second air duct is configured to transmit the deoxygenated hydrogen, so that the hydrogen to be purified is preheated in the heat exchange unit (3), and the deoxygenated hydrogen is initially cooled in the heat exchange unit (3); and
wherein the hydrogen cooling separation unit is configured to perform secondary cooling and gas-liquid separation treatment on the deoxygenated hydrogen that has undergone initial cooling, to obtain the hydrogen to be mixed.

3. The system according to claim 1 or claim 2, wherein the nitrogen supply module (60) includes: a nitrogen release unit (2) and a nitrogen heating unit (8) connected in sequence, the nitrogen heating unit (8) being connectable and disconnectable to the first adsorption tower (9) and the second adsorption tower (10);
wherein the nitrogen release unit (2) is configured to provide initial nitrogen, and the nitrogen heating unit (8) is configured to heat the initial nitrogen to obtain regeneration nitrogen.

4. The system according to any one of claims 1 to 3, further comprising:
a hydrogen flow meter (FT), disposed on a first connection pipe (101) connecting the hydrogen production module (20) and the hydrogen deoxygenation module (30), to detect a flow rate of the hydrogen to be purified provided by the hydrogen production module (20) to the hydrogen deoxygenation module (30);
a nitrogen flow control valve (V2), disposed in the nitrogen supply module (60) and configured to control a flow rate of nitrogen provided by the nitrogen supply module (60) to the regeneration module (70); and
a dynamic adjustment module (80), electrically connected to the hydrogen flow meter (FT) and the nitrogen flow control valve (V2) and configured to, based on the flow rate of the hydrogen to be purified, control an opening degree of the nitrogen flow control valve (V2), to control a magnitude of the flow rate of nitrogen provided by the nitrogen supply module (60) to the regeneration module (70).

5. The system according to claim 4, wherein the dynamic adjustment module (80) is further configured to calculate a total input amount of the hydrogen to be purified based on the flow rate of the hydrogen to be purified and a circulation time of the hydrogen to be purified in the first connection pipe (101), and in response to the total input amount reaching a preset value, switch one of the first adsorption tower (9) and the second adsorption tower (10) included in the regeneration module (70) to the other of the first adsorption tower (9) and the second adsorption tower (10).

6. The system according to any one of claims 1 to 5, further comprising:
a third connecting pipe (203), connected between the nitrogen supply module (60) and the first adsorption tower (9);
a fourth connecting pipe (204), connected between the nitrogen supply module (60) and the second adsorption tower (10);
a third switch valve (V3), disposed on the third connecting pipe (203) and configured to control the third connecting pipe (203) to be opened or closed; and
a fourth switch valve (V4), disposed on the fourth connecting pipe (204) and configured to control the fourth connecting pipe (204) to be opened or closed;
wherein one of the third switch valve (V3) and the fourth switch valve (V4) is selectively opened at a same time instant, in response to the third switch valve (V3) being opened, the regeneration module (70) includes the first adsorption tower (9), and the second adsorption tower (10) constitutes the adsorption module (40), and in response to the fourth switch valve (V4) being opened, the regeneration module (70) includes the second adsorption tower (10), and the first adsorption tower (9) constitutes the adsorption module (40).

7. The system according to any one of claims 1 to 6, wherein nitrogen provided by the nitrogen supply module (60) to the regeneration module (70) is regeneration nitrogen configured for desorption regeneration of a desiccant in the first adsorption tower (9) or the second adsorption tower (10) to obtain nitrogen to be separated; and
wherein the regeneration module (70) further includes:
a nitrogen cooling separation unit, connectable and disconnectable to the first adsorption tower (9) and the second adsorption tower (10), connected to the hydrogen deoxygenation module (30), and configured to perform cooling and gas-liquid separation treatment on the nitrogen to be separated, to obtain nitrogen to be mixed.

8. The system according to claim 7, further comprising:
a fifth connecting pipe (205), connected between the first adsorption tower (9) and the nitrogen cooling separation unit;
a sixth connecting pipe (206), connected between the second adsorption tower (10) and the nitrogen cooling separation unit;
a fifth switch valve (V5), disposed on the fifth connecting pipe (205) and configured to control the fifth connecting pipe (205) to be opened or closed; and
a sixth switch valve (V6), disposed on the sixth connecting pipe (206) and configured to control the sixth connecting pipe (206) to be opened or closed;
wherein one of the fifth switch valve (V5) and the sixth switch valve (V6) is selectively opened at a same time instant.

9. The system according to claim 7 or claim 8, further comprising:
a seventh connection pipe (107), connected to each of the nitrogen cooling separation unit and the hydrogen deoxygenation module (30);
an eighth connection pipe (108), connected between the seventh connection pipe (107) and the first adsorption tower (9);
a ninth connection pipe (109), connected between the seventh connection pipe (107) and the second adsorption tower (10);
a seventh switch valve (V7), disposed on the eighth connection pipe (108) and configured to control the eighth connection pipe (108) to be opened or closed; and
an eighth switch valve (V8), disposed on the ninth connection pipe (109) and configured to control the ninth connection pipe (109) to be opened or closed;
wherein one of the seventh switch valve (V7) and the eighth switch valve (V8) is selectively opened at a same time instant.

10. A method for ammonia synthesis coupled with hydrogen production, comprising:
providing a hydrogen production module (20) and utilizing the hydrogen production module to provide hydrogen to be purified;
providing a hydrogen deoxygenation module (30) connected to the hydrogen production module (20), utilizing the hydrogen deoxygenation module (30) to purify the hydrogen to be purified to obtain hydrogen to be mixed, and supplying the hydrogen to be mixed to an adsorption module (40) connected to the hydrogen deoxygenation module (30);
providing a nitrogen supply module (60) and a regeneration module (70) connected in sequence, with the regeneration module (70) connected to the adsorption module (40), utilizing the nitrogen supply module (60) to supply nitrogen to the regeneration module (70), utilizing the nitrogen to perform desorption regeneration on a desiccant in one of a first adsorption tower (9) and a second adsorption tower (10) included in the regeneration module (70), and supplying nitrogen to the adsorption module (40) including the other of the first adsorption tower (9) and the second adsorption tower (10); and
utilizing the adsorption module (40) to dehydrate mixed hydrogen and nitrogen, and supplying the dehydrated hydrogen and nitrogen to an ammonia synthesis module (50) connected to the adsorption module (40).

11. The method according to claim 10, wherein the operation of utilizing the hydrogen deoxygenation module (30) to purify the hydrogen to be purified to obtain the hydrogen to be mixed includes:
providing a heat exchange unit (3) connected to the hydrogen production module (20), the heat exchange unit (3) being provided with a first air duct and a second air duct for heat exchange with each other, using the first air duct to transmit the hydrogen to be purified, and using the second air duct to transmit deoxygenated hydrogen, so that the hydrogen to be purified is preheated in the heat exchange unit (3), and the deoxygenated hydrogen is initially cooled in the heat exchange unit (3); and
providing a hydrogen heating deoxygenation unit and a hydrogen cooling separation unit each connected to an output end of the heat exchange unit (3), the hydrogen heating deoxygenation unit being further connected to an input end of the heat exchange unit (3), using the hydrogen heating deoxygenation unit to deoxygenate the hydrogen to be purified to obtain the deoxygenated hydrogen, using the hydrogen cooling separation unit to perform secondary cooling and gas-liquid separation treatment on the deoxygenated hydrogen that has undergone initial cooling, to obtain the hydrogen to be mixed.
